Europäisches Patentamt

(19) European Patent Office

Office européen des brevets

(11) Publication number: **0 100 987**
**B1**

(12) **EUROPEAN PATENT SPECIFICATION**

(45) Date of publication of patent specification: **04.11.87**

(51) Int. Cl.⁴: **F 16 K 5/22**

(21) Application number: **83107559.3**

(22) Date of filing: **01.08.83**

(54) **Plug valve with fixed seating adjustment.**

(30) Priority: **16.08.82 US 408107**

(43) Date of publication of application:
**22.02.84 Bulletin 84/08**

(45) Publication of the grant of the patent:
**04.11.87 Bulletin 87/45**

(84) Designated Contracting States:
**BE CH DE FR GB IT LI NL SE**

(56) References cited:
**EP-A-0 033 669**
**FR-A-1 157 856**
**FR-A-1 280 112**
**FR-A-2 402 131**
**US-A-1 781 821**
**US-A-2 829 667**
**US-A-2 945 668**
**US-A-4 034 776**

(73) Proprietor: **Rockwell International Corporation**
**600 Grant Street**
**Pittsburgh Pennsylvania 15219 (US)**

(72) Inventor: **Douglass, Kenneth Lane**
**400 Swissvale Avenue**
**Pittsburgh, PA 15221 (US)**
Inventor: **MacLeod, John G.**
**c/o ITT Hoffman 1700 E. 9th Street**
**Indianapolis, Indiana 46222 (US)**

(74) Representative: **Leiser, Gottfried, Dipl.-Ing. et al**
**Patentanwälte Prinz, Leiser, Bunke & Partner**
**Manzingerweg 7**
**D-8000 München 60 (DE)**

Courier Press, Leamington Spa, England.

## Description

This invention relates to lubricated tapered plug valves and, in particular, those in which means are provided for preventing the plug from being "seized" or locked up as a result of transient operating conditions such as unusually high fluid pressure or temperature conditions of relatively short duration.

Conventional lubricated tapered plug valves, such as that shown, for example, in the US—A—1,781,821 and US—A—2,945,668 have a plug formed with a "locking" taper seated in a similarly tapered seat formed within the body. A system of lubricant grooves is formed in the tapered surface of the plug and in the seating surface on the body into which a sealant may be introduced in order to provide a sealing and lubricating film between the plug and its seat. Typically, as shown in those patents, the plug is biased toward the seat and even when a definite bias is not provided, in the type of valve shown in the first above mentioned patent, the weight of the plug itself tends to urge into the seat under the force of gravity, when the valve is mounted in an upright position as shown.

When such valves are placed in service in the field, they are frequently exposed to pressure and temperature transients of widely varying magnitude. Thus, while the valve may be installed in a line carrying fluid which is normally under 300 p.s.i. (20.7 bar), the line may be subjected to larger pressure pulses of relatively short duration which may be due to any number of causes, such as malfunction of a pump or compressor. Also, when the valve is installed where it is exposed to the elements or near other equipment which causes variations in ambient temperature, the valve may be subjected to widely varying temperature transients. These pressure or temperature transients or both, if sufficiently large in magnitude can cause the body to expand temporarily beyond its normal dimensions. In conventional valves such as that shown in the patents referred to above, the plug, due to its weight or due to the biasing force of the spring which is often provided, will be urged further into its seat than is normal as the body expands. When the pressure or temperature transients dissipate, the body will contract to its normal size and the plug will be seized or locked into the tapered seat making it difficult or impossible to rotate.

US—A—4,034,776, shows a tapered lubricated plug valve in which the plug is fluid pressure balanced by means of passages in the plug which place chambers at either end of the plug into communication with the line fluid pressure in the port through the plug. Additionally, a spring urges the plug in a direction away from its seat against an adjustable stop member. In the assembly of that valve, the adjustable stop member is tightened down to a predetermined nominal amount to establish the proper relationship between the plug and its seat. Lubricant may then be injected into the lubricant system to provide a lubricant film of suitable dimension between the plug and its seat, the spring bias then being effective to maintain the desired space relationship between the plug and its seat. The problem that arises with such a valve and other prior art valves referred to above is that if the valve should leak when in service, the person responsible for the proper operation of the valve tends to assume it is because of improper seating thrust on the plug rather than a deterioration of the sealant film between the plug and its seat. Accordingly, the adjustable stop member is adjusted to place more seating thrust on the plug which simply tends to wedge the plug further into the tapered seat. Such a procedure may or may not temporarily cure the leak but it will also make the plug more vulnerable to lockup or seizure under the transient conditions that are described above and in US—A—4,034,776.

US—A—2,945,668, shows a lubricated plug valve in which a shim or spacer is provided between the bottom cover and the body and a stop surface on the cover which defines the maximum amount the plug may move away from its seat. In that valve, however, a spring member is interposed between the stop surface on the cover and the plug to constantly urge the plug toward its seat. Thus, the plug in such a valve will be urged further and further into the tapered seat as the body expands under the pressure and temperature transients described above and will likewise be subject to seizure and lockup when these transients are dissipated.

The invention aims at providing an improved lubricated plug valve to be assembled easily and a method of assembly of such a valve whereby the above-mentioned problems are cured, in particular the problem of improper seating thrust on the plug.

In accordance with a first aspect of the invention, a lubricated plug valve comprises a body having a tapered seat defining a central chamber within said body, inlet and outlet passages in said body intersecting and communicating with said central chamber, a tapered plug having a port therethrough mounted for rotation in said chamber between open and closed positions, means for introducing a sealant film between said seat and said plug, means for establishing the thickness of said film comprising resilient means urging said plug axially away from said seat, a cover on said body opposite the larger end of said plug, said cover and said plug having spaced apart parallel annular surfaces, and means for limiting the travel of said plug away from said seat, characterized in that said plug has a stem projecting outwardly of said chamber from its larger end, in that said cover has an opening through which said stem extends outwardly of said body, in that said annular parallel surfaces surround said stem and in that said limiting means are non-adjustable from the outside and comprise annular spacers of predetermined thickness interposed between said annular parallel surfaces.

According to another aspect of the invention, a method of assembly of a lubricated plug valve is provided, said valve being comprised of a body having a tapered seat defining a central chamber within said body, inlet/outlet passages in said body intersecting and communicating with said central chamber, a tapered plug having a port therethrough mounted in said chamber for limited axial movement away from said seat, a stem projecting from the larger end of the plug, means for establishing the amount of said limited axial movement and means biasing said plug away from said seat, said body being closed by a cover and said method comprising the step of injecting lubricant between said plug and said seat, characterized in that said plug is urged into said seat against the thrust of said biasing means with sufficient force to merely assure a good metal-to-metal contact between said plug and said seat, the distance between the large end top surface of said plug and the plane of the inner wall of said cover is measured, at least one annular spacer is selected and mounted on said top surface to fix the distance between said plane and the top surface of said spacer within the range considered to be the proper limit of axial movement of said plug away from said seat, and lubricant is injected under pressure between said seat and said plug to move said plug away from said seat until the top of said spacer contacts said plane.

Thus, to meet the problems inherent in the prior art as outlined above, Applicant has provided a lubricated tapered plug valve in which by means of shims or spacers which locate a stop surface within the valve body the optimum spacing between the plug and the seat is fixed at the time the valve is assembled and, therefore, not accessible without disassembly of the valve. Also, a spring is provided which at all times urges the plug away from its seat against a stop surface to maintain the optimum spacing between the plug and its seat and, therefore, the optimum sealant film thickness. The stop surface limiting movement of the plug is provided on the cover of the valve. The spacers are provided between the large end of the plug and the stop surface on the cover.

A preferred embodiment of the invention will now be disclosed with reference to the drawings wherein:

Figure 1 is a cross sectional elevational view of a plug valve embodying the instant invention, and

Figure 2 is a horizontal sectional view of the valve taken along the line 2—2 of Figure 1.

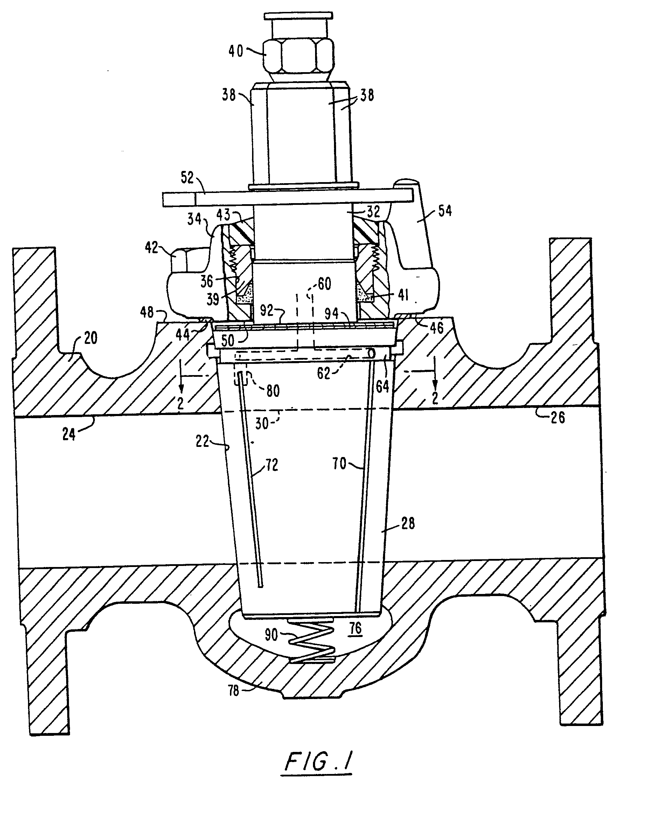

Referring to the drawing, a body 20 has a central chamber which is defined by a tapered seat 22 formed within the body. Inlet/outlet passages 24 and 26 communicate with the central chamber in which is rotatably mounted a tapered plug 28 having a port 30 therethrough shown in dotted lines which communicates with the inlet/outlet passages when the plug is in its valve open position. A stem 32 projects from the plug 28 through an opening 36 formed in cover 34. The outer portion of the stem 32 has flat portions 38 for the reception of a wrench to facilitate rotating the stem and plug. A sealant/lubricant fitting 40 is mounted on the outer end of the stem and is adapted to receive a mating fitting on a grease gun for injecting sealant to the internal sealant system hereinafter described. A gland 39 is threaded into opening 36 and serves to compress a graphitic ring 41 into sealing contact with the outer circumference of the stem 32. A wiper ring 43 of elastomeric material is also provided in opening 36 above gland 39 to project the gland and seal ring 41 from moisture and foreign particles. The cover 34 is secured to the body 20 by means of a plurality of bolts 42 only one of which is shown in Figure 1.

An annular metallic seal ring 44 is compressed between annular surface 46 on cover 34 and surface 48 machined on the top of the body 20. In one form of the invention, the seal 44 may also function as a spacer to achieve a proper spacing between the surface 50 of the cover and the top of the plug as will be hereinafter explained.

A stop collar 52 is secured to the stem intermediate its length and has circumferentially spaced stop surfaces (not shown) which cooperate with a post 54 formed on the cover to limit rotation of the plug to 90 degrees.

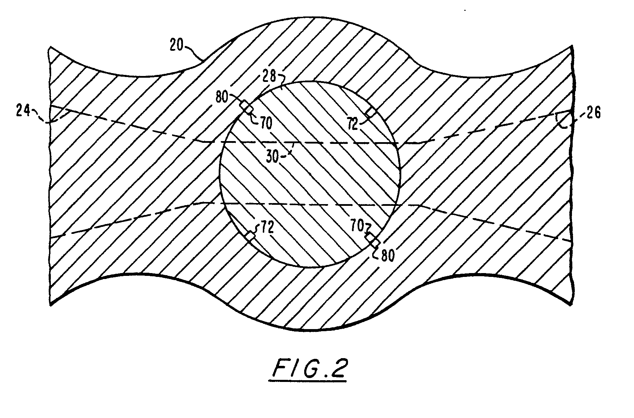

An axially extending passage is formed within the stem 32, only a portion of which is shown in dotted lines at 60. At its upper end the passage 60 communicates with the interior of fitting 40 and at its lower end the passage 60 communicates with a radially extending passage 62 in the large end of the plug which opens into annular groove 64 formed in the outer surface of the plug 28 near its large end. Diametrically opposed grooves 70 (see Figure 2) are formed in the exterior surface of the plug and extend from the groove 64 to the bottom of the plug (Figure 1) where they communicate with a chamber 76 enclosed between a bottom wall portion 78 of the body 20 and the small end of the plug.

Diametrically opposed grooves 72 are also formed in the exterior surface of the plug but do not extend to either chamber 76 of the groove 64 as do grooves 70. Relatively short bridging grooves 80 are formed on the seating surface of the body at diametrically opposed positions as shown in Figure 2, one of which grooves is shown in dotted lines in Figure 1. Grooves 80 serve to connect the grooves 72 with annular groove 64 formed in the upper portion of the plug when the plug is in its closed position.

Lubricant/sealant is introduced into the system of grooves above described through fitting 40 and flows through passages 60, 62 into the annular groove 64. In either the open or closed position pressurized sealant/lubricant will flow into groove 70 and into chamber 76 whereby the plug may be jacked away from its seat 22, all as is conventional in the prior art. In Figure 2 the plug is shown in its valve open position where the grooves 70 in the plug surface register with bridging grooves 80 in the seat. However, since the grooves 70 extend the entire distance between groove 64 and chamber 76, the grooves 80 perform no function at this point. However, when the plug is rotated 90 degrees in a clockwise direction as shown in Figure 2 to its closed position, the grooves 72 will register with grooves 80 in the seat whereby sealant/lubricant under pressure is supplied to grooves 72 through grooves 80 which bridge the end of grooves 72 and annular groove 64. Thus, when the valve is closed, one set of grooves 70 and 72 and the groove 64 all of which are filled with lubricant/sealant under pressure in the surface of the plug will circumscribe the opening to passageway 24 while the other set of grooves 70 and 72 and groove 64 will circumscribe the opening to passage 26 to form an effective seal to prevent the leakage of fluid between the plug and the seat. When the valve is rotated in a counter-clockwise direction from its closed position to its open position, the only grooves which are exposed to the passages 24 or 26 are grooves 72. However, upon initial counter-clockwise movement from the closed position, the grooves 72 will be disconnected from the bridging grooves 80 and, since grooves 72 do not extend to chamber 76, very little, if any, of the sealant in the grooves 72 will be extruded into the passages 24 or 26.

As mentioned above, in prior art valves, the plug is conventionally urged with varying degrees of resiliency toward the tapered seat in the body. In the instant invention, however, a spring 90 is compressed between the wall 78 of the body and the smaller end of the plug 28 so as to constantly urge the plug axially in a direction away from the seat. Additionally, at the large end of the plug means are provided whereby movement of the plug away from its seat under the influence of spring 90 is limited so that the space between the plug and its seat will at all times be that which provides an optimum thickness of lubricant/sealant film between the plug and its seat. In one form of the invention, one or more washerlike shims or spacers may be provided at the large end of the plug as shown. During assembly, the plug is urged into its seat against the thrust of spring 90 with sufficient force to merely assure a good metal-to-metal contact between the plug and the seat. The distance between the top surface 94 of the plug and the plane of surface 50 on the cover is then measured. One or more spacers or shims 92, which are available to the assembler in various thicknesses, are then selected and mounted on the top surface 94 to fix the distance between the surface 50 and the top surface of the stack of shims within the range of between .004 inches and .008 inches (0.1 and 0.2 mm) which is considered to be the proper limit of movement of the plug away from its seat in order to provide an optimum sealant/lubricant film thickness between the plug and its seat. Sealant/lubricant is then injected under pressure into the lubricant system through the fitting 40 as described above. The plug will then be moved away from its seat under the influence of spring 90 and under the influence of the pressurized lubricant/sealant until the top of the spacer stack 92 contacts the surface 50.

As explained above, in service, the valve may be exposed to transient conditions of abnormally high pressures, temperatures or vibrations in the line in which the valve is located, all of which would cause the plugs of the prior art valves to project further and further into their seats whereupon dissipation of the transient conditions would cause the valve body to contract which would result in seizure or lockup of the plug. In the valve of the instant invention, however, not only is the plug prevented from following deeper into its tapered seat under transient conditions by the thrust of the spring 90 but, because the plug and spacers 92 are held firmly against the surface 50 of the cover, the proper spacing between the plug and its seat will be maintained when the transient conditions have dissipated.

In another form of the invention, the spacer stack 92 may be dispensed with and the seal ring 44 utilized to achieve the proper spacing between the surface 50 on the cover and the top surface 94 on the plug. In this form of the invention, the seal 44 would function both as a seal and as a spacer and would be available to the assembler in various thicknesses so that during assembly the proper size of the seal/spacer 44 would be selected to hold the distance between the surface 50 and the surface 94 to the range of .004 inches to .008 inches (0.1 to 0.2 mm) when the valve plug is in metal-to-metal contact with its seat.

It might be possible to achieve the advantages of the instant invention by simply holding the locations of the surfaces 50 and 94 within very close tolerances during the machining process so that in the assembled relationship, the distance between the surfaces 50 and 94 would be in the requisite range of .004 inches and .008 inches (0.1 to 0.2 mm). However, as a practical matter, it is virtually impossible to maintain such close tolerances in practical manufacturing methods particularly when it is realized that relatively small variations in the surface of the tapered seat and the tapered plug will result in relatively large variations in the axial position of the plug.

An important advantage of the instant invention is that the appropriate adjustment for plug travel away from its seat is made during the assembly and cannot be changed in the field without disassembly of the valve. As pointed out above, some prior art valves, such as that shown in the patent to Eshghy, provide a stop member at the large end of the plug against which the plug is urged by a spring. However, since in such valves, the location of the stop may be adjusted by means external to the valve. As a result, individuals responsible for the maintenance of the valve will frequently change the location of the stop in an attempt to cure a valve leak. This, of course, results in a change in the spacing between the plug and its seat often resulting in inadequate lubricant/sealant film, and may also force the plug further into the tapered seat making it even more vulnerable to lockup.

**Claims**

1. A lubricated plug valve comprising a body (20) having a tapered seat (22) defining a central chamber within said body (20), inlet and outlet passages (24, 26) in said body (20) intersecting and communicating with said central chamber, a tapered plug (28) having a port (30) therethrough mounted for rotation in said chamber between open and closed positions, means for introducing a sealant film between said seat (22) and said plug (28), means for establishing the thickness of said film comprising resilient means (90) urging said plug (28) axially away from said seat (22), a cover (34) on said body (20) opposite the larger end of said plug (28), said cover (34) and said plug (28) having spaced apart parallel annular surfaces, and means for limiting the travel of said plug (28) away from said seat (22), characterized in that said plug (28) has a stem (32) projecting outwardly of said chamber from its larger end, in that said cover (34) has an opening through which said stem (32) extends outwardly of said body (20), in that said annular parallel surfaces surround said stem (32) and in that said limiting means are non-adjustable from the outside and comprise annular spacers (92) of predetermined thickness interposed between said annular parallel surfaces.

2. A method of assembly of a lubricated plug valve comprised of a body (20) having a tapered seat (22) defining a central chamber within said body (20), inlet/outlet passages (24, 26) in said body (20) intersecting and communicating with said central chamber, a tapered plug (28) having a port (30) therethrough mounted in said chamber for limited axial movement away from said seat (22), a stem (32) projecting from the larger end of the plug (28), means (92) for establishing the amount of said limited axial movement and means (90) biasing said plug (28) away from said seat (22), said body (20) being closed by a cover (34) and said method comprising the steps of injecting lubricant between said plug (28) and said seat (22), characterized in that

— said plug (28) is urged into said seat (22) against the thrust of said biasing means (90) with sufficient force to merely assure a good metal-to-metal contact between said plug (28) and said seat (22);

— the distance between the large end top surface (94) of said plug (28) and the plane (50) of the inner wall of said cover (34) is measured;

— at least one annular spacer (92) is selected and mounted on said top surface (94) to fix the distance between said plane (50) and the top surface of said spacer (92) within the range considered to be the proper limit of axial movement of said plug (28) away from said seat (22);

— and lubricant is injected under pressure between said seat (22) and said plug (28) to move said plug (28) away from said seat (22) until the top of said spacer (92) contacts said plane (50).

**Patentansprüche**

1. Geschmiertes Kegelventil mit einem Körper (20), der einen sich verjüngenden Sitz (22) aufweist, welcher eine mittige Kammer innerhalb dieses Körpers (20) bildet, Einlaß- und Auslaßkanälen (24, 26) in diesem Körper (20), welche die mittige Kammer schneiden und mit ihr in Verbindung stehen, mit einem sich verjüngenden Drehschieber (28), durch den eine Öffnung (30) hindurchführt und welcher in der Kammer zwischen einer Öffnungsstellung und einer Schließstellung drehbar angeordnet ist, mit einer Einrichtung zum Einführen eines Dichtmittelfilms zwischen dem Sitz (22) und dem Drehschieber (28), Mitteln zum Einstellen der Dicke dieses Films mittels einer elastischen Einrichtung (90), welche den Drehschieber (28) in Axialrichtung von dem Sitz (22) fort drückt, einem Deckel (34) auf dem Körper (20) gegenüber dem breiteren Ende des Drehschiebers (28), wobei dieser Deckel (34) und der Drehschieber (28) voneinander beabstandete parallele Ringoberflächen aufweisen, und mit einer Einrichtung zur Begrenzung der Fortbewegung des Drehschiebers (28) von dem Sitz (22), dadurch gekennzeichnet, daß der Drehschieber (28) einen Schaft (32) aufweist, der sich aus der Kammer von seinem breiteren Ende ausgehend herauserstreckt, daß der Deckel (34) eine Öffnung aufweist, durch welche hindurch sich der Schaft (32) aus dem Körper (20) herauserstreckt, daß die genannten ringförmigen parallelen Oberflächen diesen Schaft (32) umgeben, und daß die Begrenzungseinrichtung von der Außenseite her nicht einstellbar ist und ringförmige Abstandshalter (92) von vorbestimmter Dicke umfaßt, welche zwischen den ringförmigen parallelen Oberflächen eingefügt sind.

2. Verfahren zum Montieren eines geschmierten Kegelventils mit einem Körper (20), der einen sich verjüngenden Sitz (22) aufweist, welcher eine mittige Kammer innerhalb des Körpers (20) bildet, Einlaß/Auslaß-Kanälen (24, 26) in dem Körper (20), welche die mittige Kammer schneiden und mit dieser in Verbindung stehen, einem sich verjüngenden Drehschieber (28), durch den eine Öffnung (30) hindurchführt und welcher in der Kammer so gelagert ist, daß er eine begrenzte Axialbewegung von dem Sitz fort (22) ausführen kann, einem von dem größeren Ende des Drehschiebers (28) abstehenden Schaft (32), Mitteln (92) zum Einstellen der Größe der begrenzten Axialbewegung und Mitteln (90), welche den Drehschieber (28) von dem Sitz (22) fort vorspannen, wobei der Körper (20) durch einen Deckel (34) verschlossen ist und wobei das Verfahren die Einspritzung eines Schmiermittels zwischen Drehschieber (28) und Sitz (23)˙ einschließt, dadurch gekennzeichnet, daß

— der Drehschieber (28) in den Sitz (22) entgegen der Kraft der Vorspannmittel (50) mit ausreichender Kraft gedrückt wird, um lediglich einen guten Metall-auf-Metall-Kontakt zwischen dem Drehschieber (28) und dem Sitz (22) zu gewährleisten;

— der Abstand zwischen der Oberseite (94) des Drehschiebers (28) an seinem großen Ende und der Ebene (50) der Innenwandung des Deckels (34) gemessen wird;

— wenigstens ein ringförmiger Abstandshalter (92) ausgewählt und auf der Oberseite (94) aufgebracht wird, um den Abstand zwischen der genannten Ebene (50) und der Oberseite des Abstandshalters (92) festzulegen innerhalb des Bereiches, der als die geeignete Grenze der Axialbewegung des Drehschiebers (28) von dem Sitz (22) fort angesehen wird;

— und ein Schmiermittel unter Druck zwischen den Sitz (22) und den Drehschieber (28) eingespritzt wird, um den Drehschieber (28) von dem Sitz (22) fort zu bewegen, bis die Oberseite des Abstandshalters (92) mit der Ebene (50) in Berührung kommt.

**Revendications**

1. Vanne à boisseau lubrifié comprenant un corps (20) comportant un siège conique (22) qui définit une chambre centrale à l'intérieur du corps (20), des passages d'entrée et de sortie (24, 26), ménagés dans le corps (20), qui rencontrent la chambre centrale et communiquent avec elle, un boisseau conique (28) traversé par un orifice (30) et monté à rotation dans la chambre entre des positions ouverte et fermée, des moyens pour introduire un film de produit d'étanchéité entre le siège (22) et le boisseau (28), des moyens pour déterminer l'épaisseur du film comprenant des moyens élastiques (90) sollicitant le boisseau (28) axialement à l'écart du siège (22), un couvercle (34) sur le corps (20) en face de la grande extrémité du boisseau (28), le couvercle (34) et le boisseau (28) comportant des surfaces annulaires parallèles écartées l'une de l'autre, et des moyens pour limiter l'écartement du boisseau (28) par rapport au siège (22), caractérisée en ce que. le boisseau (28) comporte une tige (32) qui fait saillie vers l'extérieur de la chambre depuis la plus grande extrémité du boisseau (28), en ce que le couvercle (34) comporte une ouverture à travers laquelle la tige (32) fait saille vers l'extérieur du corps (20), en ce que les surfaces annulaires parallèles entourent la tige (32) et en ce que les moyens de limitation ne sont pas réglables depuis l'extérieur et comprennent des éléments d'écartement annulaires (92) d'épaisseur prédéterminée interposés entre les surfaces annulaires parallèles.

2. Procédé d'assemblage d'une vanne à boisseau lubrifié constituée d'un corps (20) comportant un siège conique (22) définissant une chambre centrale à l'intérieur du corps (20), des passages d'entrée/sortie (24, 26), ménagés dans le corps (20), qui rencontrent la chambre centrale et communiquent avec elle, un boisseau conique (28) traversé par un orifice (30) et monté dans la chambre avec possibilité de s'écarter du siège (22) par un déplacement axial limité, une tige (32) faisant saillie depuis la grande extrémité du boisseau (28), des moyens (92) pour déterminer l'amplitude du déplacement axial limité, et des moyens (90) sollicitant le boisseau (28) à l'écart du siège (22), le corps (20) étant fermé par un couvercle (34) et le procédé comprenant l'étape qui consiste à injecter du lubrifiant entre le boisseau (28) et le siège (22), caractérisé en ce que:

— on sollicite le boisseau (28) pour le faire pénétrer dans le siège (22), contre la poussée des moyens de sollicitation (90), avec une force suffisante pour assurer simplement un bon contact métal contre métal entre le boisseau (28) et le siège (22);

— on mesure la distance entre la surface supérieure (94) de la grande extrémité du boisseau (28) et le plan (50) de la paroi intérieure du couvercle (34);

— on choisit au moins un élément d'écartement annulaire (92) et on le monte sur la surface supérieure (94) pour que la distance entre le plan (50) et la surface supérieure de l'élément d'écartement (92) soit à l'intérieur de la fourchette qu'on considère comme la limite convenable de l'écartement axial du boisseau (28) relativement au siège (22);

— on injecte du lubrifiant sous pression entre le siège (22) et le boisseau (28) pour éloigner le boisseau (28) du siège (22) jusqu'à ce que le sommet de l'élément d'écartement (92) vienne au contact du plan (50).

FIG.1

_FIG.2_